# EUROPEAN PATENT SPECIFICATION

(11) **EP 1 090 748 B1**
(45) Date of publication and mention of the grant of the patent: **11.10.2006**
(21) Application number: 00303510.2
(22) Date of filing: 26.04.2000
(51) Int. Cl.: B32B 29/00, B32B 1/08, B31C 3/00, B65H 75/10

(54) **Paper mill core structure for improved winding and support of paper mill roll**
Kernstruktur in der Papierindustrie zum Bewickeln und zur Stützung einer Papierrolle
Structure de noyau dans l' industrie papetière pour l'enroulement et le support de rouleaux de papier

(30) Priority: 04.10.1999 US 411522
(43) Date of publication of application: 11.04.2001
(73) Proprietor: Sonoco Development, Inc., Hartsville, South Carolina 29550 (US)
(72) Inventor: Gerhardt, Terry, Madison, Wisconsin 53717 (US); Van de Camp, Wim, 6231 NW Meerssem (NL); Johnson, Charles G., Madison, Wisconsin 53711 (US)
(74) Representative: MacDougall, Donald Carmichael

(56) References cited:
- EP-A- 0 598 372
- WO-A-95/19930
- US-A- 5 393 582
- PATENT ABSTRACTS OF JAPAN vol. 018, no. 160 (M-1578), 17 March 1994 (1994-03-17) & JP 05 330743 A (TORAY IND INC), 14 December 1993 (1993-12-14)

## Description

### FIELD OF THE INVENTION

The invention is directed to a paperboard core structure for winding and supporting heavy rolls of wide, continuous paper sheet. More particularly, the invention is directed to a multilayer paperboard core structure having a high flat crush strength and dynamic strength for winding and supporting rolls of continuous paper mill sheet having a width exceeding 100 in. (254 cm.), and a roll diameter typically above about 50 in. (127 cm.).

### BACKGROUND OF THE INVENTION

Wide, heavy paperboard cores for supporting wide and heavy paper mill rolls used in high end applications such as gravure printing, are constructed to meet a demanding set of strength requirements including a high flat-crush strength and a high dynamic strength. These and other strength requirements are necessary because the paperboard cores are supported internally at their ends by expanded chucks during winding and unwinding operations in which the roll of paper wound onto the core has a weight above two tons (1,800 kg), typically approaching or exceeding five tons (4,500 kg.), and spans a width typically between about 100 inches and 140 inches (254 cm. and 356 cm.). These cores are currently supplied in two standard internal diameter (ID) sizes of 3 in. (76.2 mm.) and 6 in. (152.0 mm) in the United States, and in a standard ID of 150.4 mm in Europe, (which corresponds to the 6 in. ID U.S. paper mill core).

The problem known as "center burst" failure of these heavy and wide paper rolls has frustrated the paper mill industry for years. In particular, paper rolls that appear perfect when wound, subsequently fail for no apparent reason in the unwinding operation during printing. The symptoms of center burst failure are well known and consistent. Paper in the portion of the roll near the core, and at the ends of the roll above the unwind chucks, bursts, and patches can be squeezed sideways out of the roll. These patches significantly increase the chances of a web break during the printing process resulting in costly downtime at the press room. Also, patches can lay on top of the remaining sheet causing misprints and quality problems. Such defective paper rolls returned to the paper mill supplier can have a major impact on profitability.

The exact cause of center burst failure has not been identified. For example, examination of paperboard cores supporting paper mill rolls having center burst failure defects has not resulted in identification of any correlated defects in the cores. Center burst failure occurs in about 1-8% of paper mill rolls and it is known that the frequency of center burst failure has been increasing. This increase has been attributed to the use of wider and heavier paper rolls. Also, as compared to fine quality papers of prior decades, current fine quality papers are often thinner with lower friction surfaces and often have lower strength due to a higher recycled fiber content. As a result, it is much more difficult to maintain winding tension and to build a uniform structure throughout the diameter of the paper roll. These problems have been addressed by modifications of paper mill winding apparatus to provide continuous monitoring and control of paper tension during winding along with the application of torque in such a way as to give a desired profile of winding tension. These modifications build friction and compression into the wound paper mill roll in order to minimize possible harm to the paper roll due to slipping of various layers on the roll during shipping and subsequent unwinding. Nevertheless, center burst failure persists and continues to increase with no predictable pattern or cause.

The assignee of the present application has developed various paperboard core structures and techniques to address specific problems with paperboard cores designed for specific end uses. For example, U.S. Patent No. 5,393,582 issued February 28, 1995 to Yiming Wang, Monica McCarthy, Terry D. Gerhardt, and Charles G. Johnson discloses paperboard tube structures of enhanced flat crush strength. These structures involve the use of zones or layers of paperboard plies distributed within the tube wall such that lower strength, lower density paperboard plies are positioned on the exterior and interior portions of the tube wall, while higher density, higher strength paperboard plies are positioned in the middle or central portion of the paperboard tube wall. U.S. Patent No. 5,505,395 issued April 9, 1996 to Yanping Qiu and Terry D. Gerhardt discloses paperboard tube structures that address tube inside diameter deformation problems which arise when tubes are supported on a mandrel and subjected to substantial radial compression loading as a result of highly retractive yarns or films wound onto the core under high tension. These core structures involve the use of zones of high strength, high density paperboard plies positioned on the exterior and interior portions of the tube wall with lower strength, lower density paperboard plies positioned in the middle or central portion of the paperboard wall. In addition, factors influencing radial crush strength of paperboard tubes are discussed in T. D. Gerhardt, *External Pressure Loading of Spiral Tape Paper Tubes: Theory and Experiment*, Journal of Engineering Materials and Technology, Vol. 112, pp. 144-150 (1990).

Although these and other tube structures and modifications have been proposed for dealing with specific paperboard core end use requirements, the center burst problem associated with the wide heavy paperboard cores for wide heavy paper mill sheet rolls has not been shown to be caused by any property or apparent defect in paperboard cores. In addition, the extreme weight of paper mill paper rolls and the extreme dynamic stresses applied to the paperboard core during winding operations dictate that these paperboard cores must exhibit high flat crush and dynamic strength, thus limiting the range of core modifications available to address possible core structure variants within the desired wall thickness range to decrease center burst failure. Possible core modifications are further limited in that the inside diameter portions of the paperboard core are formed from extremely high strength, high density paperboard plies because of the so-called chuck "chew-out" forces applied by the surface of the winding chuck to the inside surface of the core during winding. Indeed, because of these various requirements, paperboard cores for wide, heavy paper mill rolls are conventionally constructed entirely of extremely high strength, high density paperboard plies. Typically, the paperboard plies have a density exceeding 0.80 g/cc and a sufficient number of plies are used in the case of a 6 inc. (150 and 152 mm) internal diameter paperboard core, to provide a wall thickness of about 13 mm (0.512 inch), or in the case of a three inch inside diameter paperboard core, a wall thickness of about 16 mm (0.630 inches).

More recently, the assignee of the present application has modified the traditional paper mill winding core constructions to incorporate the optimized flat crush strength constructions disclosed in U.S. Patent No. 5,393,582 issued February 28, 1995 to Yiming Wang, Monica McCarthy, Terry D. Gerhardt, and Charles G. Johnson. Accordingly, the current paper mill winding core constructions of assignee employ zones of paperboard plies at the exterior and interior portions of the tube wall in which the ply density is within the lower portion of the high strength range (0.80 to 0.92 g/cc), together with a central zone of plies having a density in the upper portion of the high strength range (0.80 to 0.92 g/cc). The center burst performance of these cores generally exceeds, or is at least comparable to, the center burst performance of conventional, competitive paper mill winding cores.

Nevertheless, despite the high strength and high durability of the conventional paperboard core structures, and of Assignee's modified core constructions; and even though winding apparatus has been modified to optimize the build of paper mill rolls, occurrences of center burst failure persist and have been increasing.

### SUMMARY OF THE INVENTION

The invention provides paperboard core structures that can substantially reduce or eliminate center burst defects in wide, heavy paper mill rolls. The paperboard core structures of the invention are based on identification of a previously unrecognized cause of core burst failure, and on new modifications of the paperboard cores to counteract the newly identified problem.

In particular, the inventors have found that chucks used during winding operations significantly deform the exterior diameter and shape of the paperboard core. The deformation is not apparent, however, because after winding is complete and the chucks are disengaged, the core will normally return to its original size and shape. Because the diameter and shape of the core is deformed during the winding operation, the compressive and friction stresses built into the paper roll are based on the distorted shape of the core during the winding operation. However, when the chucks are disengaged after winding and the core returns to its original size and shape, a significant portion of the beneficial effects of the compressive and friction stresses built into the paper roll during winding can be lost. The distortion of the paperboard core and the paper roll build during winding, and the related changes to the paper roll structure upon removal of the core from the winding chucks, are complicated by further subsequent variable stresses that can be applied to the paper roll by the unwinding chucks inserted into the ends of the paper mill core during the unwinding operation. It is believed that the distortions of the paperboard core caused by the pressure of the unwinding chucks during the unwinding operation can, in some cases, aggravate harmful effects of the distorted stresses generated during winding and/or aggravate the loss of beneficial stresses upon removal of the core from the winding chucks, to thereby increase the possibility of core burst failure. However, in other cases, forces applied by the unwinding chucks to the core ends may counteract, at least in part, the loss of beneficial stresses and/or the distorted winding stresses built into the paper roll by the distorted core during the winding process. It is believed that the dependency of core burst failure on these separate events associated with winding and unwinding has further interfered with identification of possible causes of center burst failure.

In accordance with the present invention, paperboard cores for paper mill winding of wide and heavy paper rolls, are modified to significantly decrease or minimize outward transmission of forces applied to the inside of the core by winding and unwinding chucks. In particular, the paper mill cores of the invention are structured to allow winding and unwinding chucks to distort the interior diameter and shape of the interior body wall of the core while resisting distortion of the core exterior, i.e., the corresponding distortion of the core exterior is significantly less or substantially minimized. The modifications of paper mill cores according to the invention can be achieved while maintaining high flat crush and dynamic strength properties as are required for paper mill cores.

Paperboard core structures for counteracting center burst failure provided according to the invention include a multi-ply zone of high strength, but relatively compliant, paperboard plies within the outer 70% (based on the total body wall thickness) of the body wall. The zone of relatively compliant, high strength paperboard plies has a thickness of at least about 4 mm. In addition, the overall wall thickness of the core is preferably at least about 15 mm, and is thus preferably increased, as compared to the wall thickness of conventional high strength wide paper mill cores formed entirely of extremely high strength, extremely high density, non-compliant paperboard plies.

Advantageously the relatively compliant, high strength paperboard plies have a density of between about 0.65 and about 0.75 g/cc, more preferably, between about 0.67 and about 0.73 g/cc. In the case of the 6 in. inside diameter core (including both the 152 mm. U.S., and the 150 mm. European versions), the zone of relatively compliant, high strength paperboard plies is preferably positioned in the central portion of the paperboard wall. In the case of cores having an inside diameter of about 3 in. (76 mm.), the zone of relatively compliant, high strength paperboard plies is preferably positioned in the outer 50% of the body wall, and it is currently preferred that this zone form the exterior 40% of the body wall.

The improved core structures according to the invention substantially reduce outside diameter changes caused by winding chucks, and also decrease transfer of harmful forces to the paper roll by unwinding chucks. In accord with the invention, this is achieved by reliance on a zone of somewhat more compliant paperboard plies rather than by further strengthening the wall of the core for reasons explained in greater detail subsequently. The preferred increased core wall thickness effectively compliments the zone of more compliant, high strength paperboard plies to maintain the overall flat crush strength and dynamic strength of the paperboard core.
Moreover, preferred increases in wall thickness can also increase the maximum allowable winding speed during winding and unwinding operations (known as critical speed).

In greatly preferred embodiments of the invention, the 6 in. (150 or 152 mm.) inside diameter paper mill core has a total wall thickness of above about 15 mm., more preferably about 16 mm., and thus has an increased wall thickness as compared to the wall thickness of 13 mm. conventionally used in wide, high strength 6 in. ID cores. Advantageously, the interior 25-40% of the body wall thickness is formed from extremely dense, high strength paperboard plies in which the density ranges from about 0.80 to about 0.92 g/cc. The central 30-35% of the body wall thickness is preferably formed of high strength, more compliant paperboard plies having a density between about 0.65 and 0.75 g/cc. The exterior 30-35% of the core wall is preferably formed of the extremely dense, high strength paperboard used to form the interior zone of the body wall, as discussed above.

In the case of a 3 in. (76 mm), inside diameter paperboard core according to the invention, it is preferred that the interior 55-65% of the core body wall thickness be formed from the extremely dense, high strength paperboard plies, set forth above, and that the exterior 35-45% of the wall thickness of the 3 in. (76 mm), inside diameter core be formed from the high strength, more compliant paperboard plies discussed above. The 3 in. (76 mm), ID cores preferably have a wall thickness of about 17-19 mm as compared to the conventional 15 mm wall thickness used in 3 in. (76 mm), ID paper mill cores

According to a further aspect of the invention,there is provided: a multi-ply paperboard core for supporting a roll of wide, continuous paper mill sheet comprising: a multi-ply paperboard, core structure having a length exceeding about 100 in (255 cm), and being defined by a generally cylindrical body wall having a thickness of at least about 15 mm, and an inside diameter of 150-152 mm; said body wall including a radially interior multi-ply zone constituting about 25% to about 35% of the total thickness of the body wall and consisting essentially of paperboard plies, having a density such at least that substantially all of the plies forming the radially interior 15% of the body wall have a density exceeding about 0.80 g/cc, and substantially all of the other plies in said radially interior multi-ply zone have a density of between about 0.67 and 0.73 g/cc a second multi-ply zone within the radially outer 70% of the total thickness of the body wall consisting essentially of paperboard, plies each having a density of between about 0.65 and about 0.75 g/cc, said second zone having a thickness of at least about 4 mm total body wall thickness exceeds about 15mm: and said paperboard core comprises a total thickness exceeding 5 mm formed of paperboard plies having a density of between about 0.67 and 0.73 g/cc, and a total thickness exceeding 9 min formed of paperboard plies having a density exceeding about 0.80 g/cc.

### BRIEF DESCRIPTION OF THE DRAWINGS

In the drawings which form a portion of the original disclosure of the invention;
Figure 1 schematically illustrates in partial perspective view a winding chuck, shown in cross section, inserted into the end of a conventional paper mill core supporting a portion of a paper roll, with the lugs of the winding chuck being shown distorting the outside diameter and shape of the paperboard core in exaggerated detail;
Figure 2 schematically illustrates in partial perspective view an unwinding chuck (shown in cross-sectional view) of different configuration as compared to the winding chuck shown in Figure 1, inserted into the end of a paperboard core and supporting a portion of a paper roll, with the lugs of the unwinding chuck shown engaging the interior of the paperboard core in a configuration correspondingly different than the engagement of the winding chuck of Figure 1 with the core;
Figure 3 illustrates a perspective schematic view of a conventional paperboard paper mill core and illustrates the varying distortion of the exterior diameter and shape of the core in three different zones along the length of the core as a result of the force applied by a conventional winding apparatus;
Figure 4 is a partially broken away cross-sectional view schematically illustrating one preferred paperboard core according to the invention;
Figure 5 is a partial cross-sectional view illustrating interaction between the preferred core shown in Figure 4 and the lugs of a winding or unwinding chuck;
Figure 6 is a partially broken away cross-sectional view illustrating another preferred paper mill paperboard core according to the invention; and
Figure 7 is a partially broken away cross-sectional view illustrating yet another advantageous paper mill paperboard core according to the invention.

### DETAILED DESCRIPTION OF THE PREFERRED EMBODIMENTS

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout.

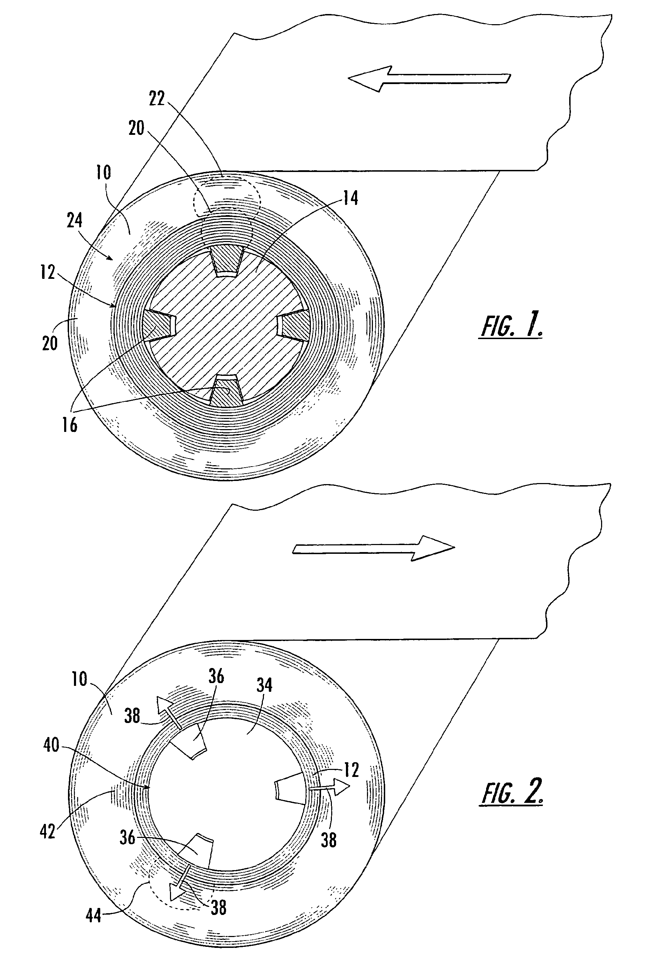

Figure 1 illustrates a conventional paper mill paper core winding process wherein a portion of a paper roll **10** is shown supported on a conventional paperboard core **12**, which in turn is supported within its interior end portions by a winding chuck **14** which includes a plurality of radially protruding lugs **16**. As is well known to those skilled in the art, the lugs **16** can be moved radially inwardly and radially outwardly by various well known mechanisms (not shown) in order to allow mounting of the paperboard core **12** on the chuck **14** and engagement of the paperboard core **12** by the chuck **14**.

In particular, when the lugs **16** are in a radially retracted position (not shown) the paperboard core can be coaxially mounted on the chuck **14**. Retraction of the lugs **16** at the completion of a winding operation also allows removal of the paperboard core **12** and the full paper roll **10** from the chuck **14**. On the other hand, when the lugs **16** are extended radially outwardly, the lugs forcefully contact the inside surface of the paperboard core **12** so that rotation of the chuck **14** also rotates the core **12**.

The conventional chucks **14** extend axially only partially into the ends of the core **12**, typically for a length of between about 2 inches (51 mm) and about 5 inches (127 mm). Because of the extremely high weight of the paper roll **10**, (i.e., exceeding two tons (4000 lbs., 1,800 kg), more typically approaching or exceeding five tons (10,000 lbs., 4,500 kg.)), and also because of its substantial length, (typically between about 100 in. (2.5 m) and 142 in. (3.6 m)), and further because of the substantial torque that must be transmitted from the chuck **14** to the conventional paperboard core **12**, the lugs **16** of the chuck **14** are designed to expand radially outwardly. The lugs **16** are driven outwardly by pressure from a torque activation mechanism that forces the lugs **16** outwardly a distance sufficient to engage the interior surface of the core

The conventional paperboard core **12** used for paper mill winding of wide, heavy paper rolls is formed entirely of a plurality of plies of extremely high density, extremely high strength paperboard. Typically, the conventional 6 in. ID core is formed from about 20-25 plies of extremely high density and high strength paperboard, that is, paperboard having a density typically greater than about 0.80 g/cc, ranging up to about 0.92 g/cc.

It was recognized by the present inventors that the extremely high density of the paperboard plies that are used to form the conventional core for wide, heavy paper rolls, is of such a high density that absorption of the chuck forces applied to the conventional paperboard core **12**, by compression of the wall of paperboard core **12**, is theoretically limited. Accordingly, the inventors designed experiments applying a plurality of miniature strain gauges to the surface of a conventional winding core in order to measure the effects of the conventional winding chuck **14**, such as that illustrated in Figure 1, to a conventional paperboard core **12** during a real time winding operation. As a result of these tests, it was found that the exterior of the paperboard cores were significantly distorted during the winding process. The distortion of the paperboard core at its ends is illustrated in Figure 1. In particular, the lugs **16** interact with the corresponding overlying portion of the conventional paperboard core illustrated in the area **20** shown in Figure 1 such that these portions of the core are bent outwardly causing the shape of the core to evolve towards the shape of a square (or other polygon) as illustrated in Figure 1. Thus, because of the extremely high density of the paperboard core, distortion of the interior shape of the core by the lugs **12** produces a corresponding distortion of the exterior of the core **12**. In turn, the areas **22** of the paper roll **10** that overlie the extended areas **20** of the paperboard core **12** are forced outwardly to a greater extent than the areas **24** of the roll **10** which do not overlie a lug **16** of the chuck **14**.

It was also found that when the winding operation has been completed and when the fully wound roll of paper **10** supported on the conventional winding core **12**, is removed from the chuck **14**, the significant circumferential strains observed on the surface of the paperboard core **12** are relieved. As a practical matter, this means that the paperboard core **12** returns to its original circular shape. Thus, the areas **22** of the paper roll **10** wound on top of the extended portions **20** of the paperboard core **12** can lose the beneficial effects of radial and friction stresses developed during the winding process, that in turn can help maintain roll integrity until the unwind operation. In addition, it is believed that in some cases the areas **22** of the paper roll **10**, can also retain harmful effects as a result of differential pressure, corresponding to the distorted outside shape of the paperboard core, during winding.

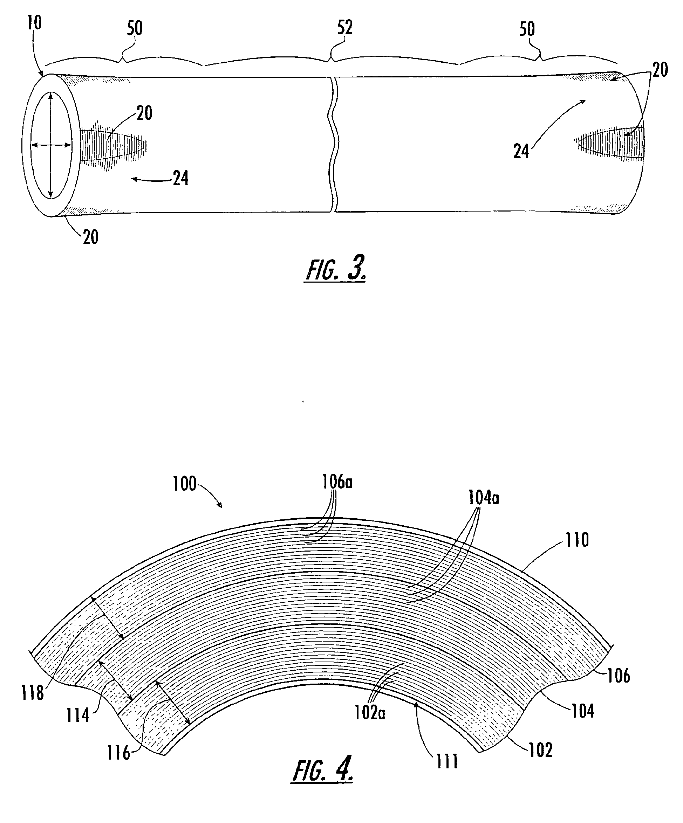

With reference to Figure 2, when the roll of paper **10** is used by the end user, i.e. by the printer, the previously distorted paperboard core **12** is supported within its interior ends by an unwinding chuck **34**. However, in many cases, the design and construction of the unwinding chucks **34** is completely different than the construction of the winding chucks **14**. This is shown for the purposes of illustration only by the illustration of three lugs **36** in the unwinding chuck **34** as opposed to the four lugs **16** in the winding chuck **14**.

During unwinding, expansion of the lugs **36** of the unwinding chuck **34** applies substantial radial force to the ID and therefore the OD of the previously distorted paperboard core **12**, as indicated by force lines **38**. Because of differences between the winding and unwinding chuck structures, or between the placement of the roll ends with respect to the chuck lugs during the different winding and unwinding operations, the outside of the core at the ends can transmit a substantially different pattern of forces to the paper roll during unwinding, (illustrated in Figure 2 as triangularly distributed forces) as compared to the forces applied to the paper roll by the distorted core during winding.

In some cases, the portion of the paperboard core **20** that was distorted outwardly during the winding operation illustrated in Figure 1, can be positioned during unwinding at a location, identified as location **40** in Figure 2, between two extended lugs **36** and no longer overlying the extended lugs as was the case during winding, i.e., overlying lugs **16** shown in Figure 1. Accordingly, significant radial pressure relief can occur in such a situation between the core and the paper in the roll **10** in the areas **42** overlying the previously extended portion of the paperboard core. Similarly, areas **44** of the paper roll **10** which overlie the extended lugs **36** of the unwinding chuck **34**, can correspond to areas **24** of the paper roll shown in Figure 1, that were positioned between, and not above, the extended lugs **16** of the winding chuck **14**. This can result in application of strains to the paper roll that are distributed circumferentially in a significantly different pattern, as compared to winding strains, to thereby aggravate any harmful effects retained in the paper roll as a result of the distorted stresses applied during winding. On the other hand, if the lugs **36** of the unwinding chuck **34** are aligned with the paper roll in a manner that substantially corresponds to the original alignment of the lugs **16** of the winding chuck **14** during the winding operation, the stresses applied to the paper roll by the unwinding chuck **34** can potentially mitigate damage resulting from the loss of beneficial radial and friction winding stresses that occurred upon disengagement of the winding chucks (as discussed earlier).

The dynamic stresses applied to the paper roll at its ends during winding imply the presence of dynamic shear strain (axial sliding of the sheet forming the paper roll between the layers) at the ends of the roll. Moreover, because the dynamic stresses are substantially reduced after 100-200 mm of paper are outwardly wound on the paper roll, the dynamic shear strain is generally present only at the interior portions of the paper roll, i.e., the portions of the paper roll in which the paper is damaged in center burst failure of a paper roll during a printing operation.

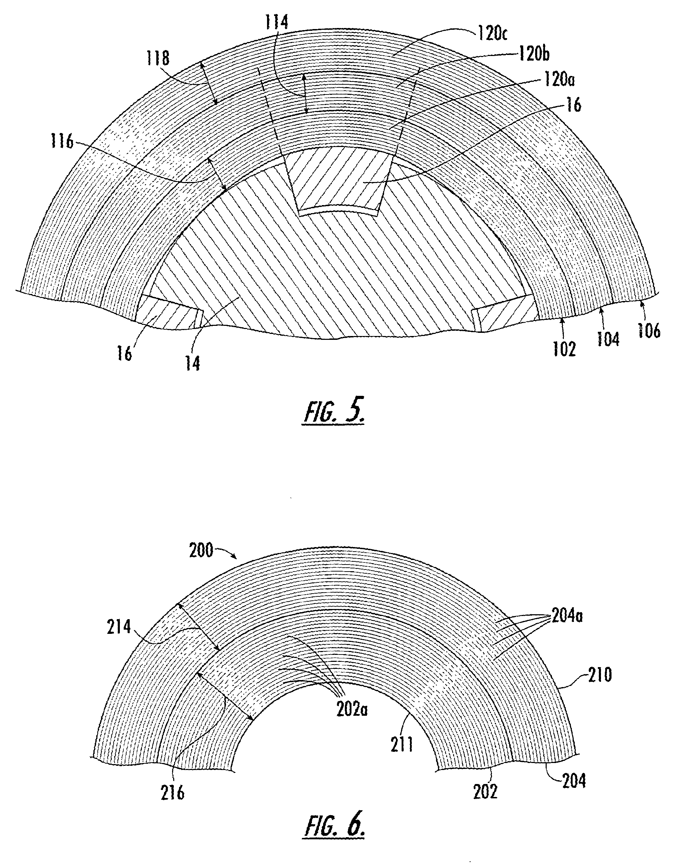

Turning now to Figure 3, the distorted shape of the paperboard core during winding is illustrated. As seen in Figure 3, the wide paperboard core **10** includes three zones along its length including two end portions **50** and a longer middle portion **52**. As generally illustrated in Figure 3, the circumferential deformation of the core occurs generally in the end portions **50** of the core whereas the middle portion **52** of the core is not distorted because the chuck **14** as shown in Figure 1 extends only into the end portions **50** of the core as illustrated in Figure 3. In addition, as illustrated generally in Figure 3, the portions of the core **20** that overlie an extended lug **16** of the winding chuck **14** shown in Figure 1, are extended outwardly more than the areas **24** of the end portions **50** of the core which are located between the areas **20**. Accordingly, the complexity of the compressional and frictional forces applied during winding to the portion of the paper roll near the core will be apparent from the distorted core shape generally illustrated in Figure 3.

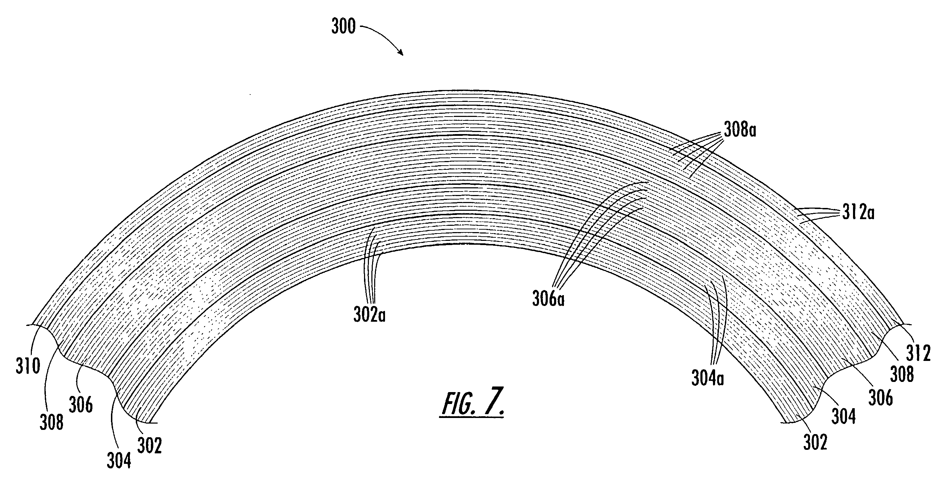

Figure 4 illustrates a preferred core structure in accordance with the present invention. The core structure of the invention **100** illustrated in Figure **4** is currently preferred structure for 6 in. (150 or 152 mm) ID paper mill cores of the invention. As illustrated in Figure **4**, the wall of the core **100** includes three multilayer zones **102**, **104**, and **106** positioned sequentially from the interior portion of the wall of core **100** to the exterior portion of the wall of core **100**. Each of the three zones **102**, **104**, and **106** include a plurality of paperboard plies **102a**, **104a**, and **106a** respectively. The plies **102a** in the zone **102** are formed of extremely high density, extremely high strength paperboard, that is, paperboard having a density exceeding about 0.80 g/cc, advantageously between about 0.80 g/cc and about 0.92 g/cc, and preferably have a density of about 0.82 g/cc or higher, and most preferably a density in the range of between about 0.82 and about 0.90 g/cc.

Paperboard densities are determined for the purposes of the subject invention in accordance with the TAPPI 220 and 411 standard tests. According to these tests, the paperboard is fully conditioned at 22.8°C (73%) plus or minus 0.56°C (one degree F) and at 50% plus or minus 2% relative humidity until it reaches equilibrium. Thereafter at least five samples of paperboard are measured for thickness and area and arc weighed. Density is then determined by dividing the weight in grams by the volume in cubic centimeters.

Returning now to Figure **4**, the multiple plies **106a** forming zone or layer **106** of the wall of core **100** as shown in Figure 4, are also advantageously formed of extremely high density, extremely high strength paperboard as discussed above in connection with zone **102** of Figure 4. The multiple plies **104a** forming the central or middle zone **104** of the wall of paperboard core **100** are formed from a high strength but relatively compliant paperboard, i.e., paperboard having a density of between about 0.65 and about 0.75 g/cc, more preferably between about 0.67 and about 0.73 g/cc. The outermost ply or plies **110**, which is optional, can be a ply or several plies (i.e., one to three plies, typically one or two plies) that are different from the extremely high density, extremely high strength paperboard plies of zone **102**, and also different from the high strength but relatively compliant paperboard plies of zone **104**. In this regard, is to be noted that outer plies of winding cores are often chosen in order to impart various surface friction or decorative aspects to the exterior of the core body; and/or to improve the manufacturing process, e.g., a spiral winding or linear draw process; and/or to improve adhesion of the exterior ply; as will be apparent to those of skill in the art. Similarly, the interior-most ply or plies **111** of the core body can be varied in the manner and for the reasons set forth above in regard to the ply or plies **110**.

For reasons discussed below in connection with Figure 5, zone 104 of the wall of the core illustrated in Figure 4, has a thickness **114** preferably of at least about 4 mm. Even more preferably, zone 104 has a thickness **114** greater than about 4.5 mm, preferably greater than about 5 mm, more preferably between about 4.5 and 6.5 mm. Currently, it is preferred that zone **104** have a thickness of between about 5 and about 6 mm, most preferably about 5.6 mm. It is also preferred that the zone **104**, formed of the compliant, high strength paperboard plies, constitute between about 25 and 40% of the total wall thickness of the core preferably between about 30 and 35% of the wall thickness.

The zones **102** and **106** formed of the extremely high density, extremely high strength paperboard plies, each have a thickness, **116** and **118**, respectively,constituting between about 25 and about 40% of the total wall thickness of the core **100**. Preferably, each of zones **102** and **106** constitutes between about 30 and 35% of the total wall thickness of the core **100**. It is currently preferred that each of the zones **102** and **106** have a thickness, **116** and **118**, respectively, constituting about 33% of the total wall thickness of the core **100**.

Figure 5 illustrates in exaggerated detail how the core structures of the invention interact with the radially expanding lugs **16** of a conventional chuck **14**. In particular, as seen in Figure 5, radial outward expansion of the lugs **16** causes the intermost zone **102** formed from extremely high density, extremely high strength paperboard plies to deform out a cylindrical configuration. Thus, each of the portions **120a** of zone **102** of the core body wall are pushed outwardly to form "corners or verticies" of a square-like or polygon-like shape. However, because the multiple plies **104a** of zone **104** arc a relatively compliant and less dense paperboard material, the portions **120b** of the zone **104** which overlie the lugs **16**, are capable of absorbing all or a substantial portion of the radial outward expansion of the portion **120a** of the interior zone **102** of the body wall of the core **100**. The portion **120c** of the exterior zone **106** of the wall of the core **100** is preferably expanded radially outwardly to only a minimal extent because of the strain energy absorption by zone **104**.

In general, and particularly in the construction of 152.4 mm (6 inch) interior diameter paperboard cores such as illustrated in Figures 4 and 5, it is preferred that a zone of extremely high strength, extremely high density paperboard, i.e., zone **106** in Figure 4, he positioned outwardly of the relatively compliant, high strength paperboard zone **104**. This is believed to enhance the absorption by the zone **104** of the radial expansion effected by the lugs **16**, without causing substantial exterior distortion of the core body **100**.

Because of the extremely high density of the paperboard plies forming the interior and exterior zones **102** and **106,** respectively, of the body wall **100** shown in Figures 4 and 5, the radial outward expansion of the lug **16** of the chuck **14** (as illustrated in Figure 5) does not significantly compress the thickness **116** of the interior zone **102**, or the thickness **118** of the exterior zone **106** of the body wall. However, because zone **104** is formed of a relatively compliant, lower density paperboard, the thickness **114** of zone **104** can compress, particularly in those portions **120b** of zone **104** which overlie the outwardly expanding lugs **16** of the chuck **14**. In general, the total thickness and number of plies in the relatively compliant zone **104** are selected to allow absorption of the expansion distance of the chuck lugs **16**. thus, where lower density paperboard materials within the lower portion of the preferred range are selected for the formation of the zone **104**, the total thickness of zone **104** can be less as compared to the situation where higher density paperboard materials within the preferred range are selected for the formation of the zone **104**.

In a preferred embodiment, the total number of plies used to form the body wall of core **100** as shown in Figures 4 and 5, will range from about 25 to about 35 plies, preferably from about 28 to about 32 plies. In general, the higher density plies will typically have a smaller thickness as compared to the lower density plies. For example, the body wall of the core **100** can advantageously be formed of a plurality of extremely high density, extremely high strength paperboard plies each having a total thickness of about 0.022 inch (0.56 mm), and a plurality of relatively compliant, high strength paperboard plies having a thickness of about 0.025 inch (0.64 mm).

As will be well understood by those of ordinary skill in the art, the thickness and density of paperboard plies can be widely varied. Preferably, the paperboard plies used in the invention will each have a density between about 0.65 and about 0.92 g/cc, more preferably between about 0.67 and about 0.90 g/cc. Paperboard strength and density are generally varied by varying pulp treatments, by varying the degree of nip compression and by variations in the raw materials forming the pulp. Paperboard densities and strengths can also be changed by employing various known additives and strengthening agents during the papermaking processes. Paperboard plies useful herein will typically have a thickness within the range of between about 0.020 inch (.51 mm) and about 0.035 inch (.89 mm), more typically between about 0.022 inch (0.56 mm) and about 0.030 inch (0.76 mm).

In general, the present invention addresses a number of previously unrecognized problems and causation factors associated with the center burst problem. Significantly, the strength of extremely high density, extremely high strength paperboard plies such as are normally used to form the body wall of wide paper mill cores is derived in large part from a high pressure compression of high quality paper pulp. However, the resultant high density, high strength paperboard retains extremely little capacity for further compression, i.e., for further reduction in thickness. Accordingly, the present invention relies upon the use of a plurality of relatively strong paperboard plies, each still retaining the capacity of further compression and thickness reduction. Therefore, the lower density, high strength paperboard plies employed in the present invention are capable of absorbing a substantial amount of the radial expansion of the lugs of a conventional chuck to thereby counteract the radial expansion that would otherwise be transmitted in a corresponding amount to the exterior of the paperboard core.

Figure 6 illustrates a preferred core structure of the invention as applied to a 3 inch (76 mm) inside diameter paper mill core. The core illustrated in Figure 6 includes two zones, an interior zone **202** and an exterior zone **204**. The interior zone **202** is formed of a plurality of extremely high density, extremely high strength paperboard plies **202a** while the exterior zone **204** is formed from a plurality of high strength, but relatively compliant plies **204a**. In the core structure illustrated in Figure 6, the zone of high strength but relatively compliant paperboard layers, **204**, is advantageously positioned in the exterior 50% of the body wall of the paperboard core. Preferably, the zone **204** has a thickness **214**, which constitutes about 30 to about 45% of the body wall thickness, most preferably between about 35 and 45% of the wall thickness, e.g., about 40% of the wall thickness. Similarly the interior zone **202**, has a thickness **216**, which constitutes about 50% to about 70% of the body wall thickness, most preferably between about 55% and 65% of the wall thickness, e.g., about 60% of the wall thickness.

When the high strength, relatively compliant density paperboard plies are positioned in a zone on or near the exterior of the body wall, like in the structure illustrated in Figure 6, it is preferred that the total thickness **214** of the zone be at least about 5 mm, preferably from about 6 to about 9 mm. A preferred thickness **214** for the zone **204** of the 3 inch (76 mm) ID paperboard core structure illustrated in Figure 6 is from about 6.8 to about 7.2 mm. The currently preferred total wall thickness of the (3 inch (76 mm) ID paperboard core illustrated in Figure 6 is from about 17 to about 19 mm.

In addition, the core **200** of Figure 6 can optionally include an outermost ply or plies **210**, that are different from the extremely high density, extremely high strength paperboard plies of zone **202**, and also different from the high strength but relatively compliant paperboard plies of zone **204**. The outer ply or plies **210**, when present, are varied in the manner and for the reasons set forth above in connection with the ply or plies **110** of Figure 4, as will be apparent to those of skill in the art. Similarly, the interior-most ply or plies **211** of the core body **200** of Figure 6 can be varied in the manner and for the reasons.

Yet another embodiment of the invention is illustrated in Figure 7. The paper mill core of Figure 7 is advantageously a 6 inch (150 mm or 152 mm) ID paper mill core. The core illustrated in Figure 7 includes five zones, an interior zone **302**, an exterior zone **312**, a central zone **306**, and two zones **304** and **308**, positioned, respectively, between the interior and central zones, and between the exterior and central zones. In paper mill core structure of Figure 7, the interior zone **302** is formed of a plurality of extremely high density, extremely high strength paperboard plies **302a** while the exterior zone **312** is also formed of a plurality of extremely high strength paperboard plies **312a**. Similarly, the central zone **306** is formed of a plurality of extremely high strength, extremely high density paperboard plies. The zones **304** and **308** are each formed of a plurality of lower density, relatively compliant high strength paperboard plies **304a** and **308a**, respectively.

In the paperboard core structure illustrated in Figure 7, the interior and exterior extremely high strength, high density paperboard zones **302** and **312**, respectively, each constitute about one-sixth of the total thickness of the wall structure. Likewise, each of the paperboard zones **304** and **308** formed of lower density, relatively compliant high strength paperboard plies, constitute about one-sixth of the total thickness of the paperboard body wall. The central zone **306**, formed of extremely high strength, extremely high density paperboard plies preferably has a thickness of about one-third of the thickness of the body wall. The body wall preferably has a total thickness of at least about 15 mm. The core **300** of Figure 7 can optionally include an outermost ply or plies **310**, that are different from the extremely high density, extremely high strength paperboard plies of zones **302**, **312**, and **306**, and also different from the high strength but relatively compliant paperboard plies of zones **304** and **308**. The outer ply or plies **310**, when present, are varied in the manner and for the reasons set forth above in connection with the outer ply or plies of Figures 4 and 6, as will be apparent to those of skill in the art. Similarly, the interior-most ply or plies **311** of the core body **300** of Figure 7 can be varied in the manner and for the reasons.

The paperboard core structure illustrated in Figure 7 is currently not preferred; however, it does provide considerable strength properties while substantially decreasing distortion of the core exterior upon the application of significant radial force to the core interior.

The wide high strength paperboard cores of the invention in general have a length greater than about 100 inches, typically greater than about 120 inches (3 m) more typically about 142 inches (3.6 m) or greater. Advantageously, the paperboard cores have a minimal body wall thickness of about 13 mm and preferably have a total body wall thickness of at least about 15 mm or greater. Most preferably, the total body wall thickness will exceed the conventional body wall thickness used for a high strength paperboard core of corresponding ID. Thus, the body wall thickness of the 6 inch (152 mm) ID core illustrated in Figures 4 and 5 will preferably exceed about 15 mm., thus exceeding the standard 13 mm body wall thickness. Similarly, the body wall thickness of the 3 inch (76 mm.) ID core illustrated in Figure 6 will preferably exceed the conventional 15 mm body wall thickness for 3 inch (76 mm.), ID cores.

The use of a total body wall thickness exceeding the body wall thickness of a conventional wide, high strength paperboard core of the same or comparable ID provides several significant benefits and advantages. In particular, increasing the body wall thickness compensates for the use of a smaller amount (i.e., a smaller number of plies) of extremely high density, extremely high strength paperboard plies, as compared to the conventional structures, while still providing a flat crush strength that is comparable to or exceeds the flat crush strength of the conventional structures. In general, the paperboard cores of the present invention will have an extremely high flat crush strength of at least about 200 lbs/in (3500 N/100mm). For example, a conventional 6 inch ID high strength paperboard core formed entirely of extremely high density, extremely high strength paperboard plies has a flat crush strength of about 200 lbs/in (3500 N/100mm). A preferred 6 inch ID paperboard core as illustrated in Figures 4 and 5 can readily have a total wall thickness of 16 mm (0.630 inches) and is thus thicker than the conventional structure in an amount of about 3 mm, thus representing a 23% increase in wall thickness. However, only about 65-70% of the total wall thickness in this case, is formed of extremely high strength, extremely high density paperboard; thus, the structure illustrated in Figures 4 and 5 is preferably formed from only about 80% of the extremely high strength, extremely high density paperboard as would be used to form the conventional structure. Nevertheless, the preferred paperboard core structure illustrated in Figures 4 and 5 can readily have a flat crush strength of about 220 lbs/in (3850 N/100mm). In addition, the preferred structure illustrated in Figures 4 and 5 reduces the amount the core OD expansion for chuck engagement by about 30% compared to a conventional core.

Similarly, the preferred structures for 3 inch (76 mm.), inside diameter cores as illustrated in Figure 6 can readily have a 25% core burst improvement (reduction in the amount the core OD expansion for chuck engagement) as compared to the conventional 15 mm wall thickness structure. Nevertheless, the flat crush strength of the preferred structures illustrated in Figure 6 can readily be about 312 lbs/in (5425 N/100mm) as compared to the conventional flat crush strength for a 15 mm body wall thickness 3 inch (76 mm.), ID core, of about 300 lbs/in (5250 N/100mm). In addition, the dynamic strength properties of the paperboard core illustrated in Figure 6 preferably is comparable to or exceeds the dynamic strength of the conventional comparable ID core.

The use of a higher wall thickness in accord with the present invention also enables attainment of a higher allowable rotational speed, or "critical speed". Accordingly, the preferred paperboard cores according to the invention can be rotated at speeds from about 3 to about 5% greater than the critical rotation speed of conventional core structures. Preferably the increase in rotational speed is achieved by use of a total body wall thickness greater than about 15 mm in either embodiment of the invention The greater wall thickness associated with the preferred structures increases core OD. The increased OD results in a lower rotational speed for any web speed during winding and unwinding. Thus, the critical speed performance is improved.

Exemplary currently preferred paper mill winding cores according to the invention have the constructions set forth below.

### Construction 1

**ID:** 150.4 mm **OD:** 182.4 mm **Wall Thickness** (estimated): 16 mm

| **Ply** | **Density (g/cc)** | **Thickness (micron)** |
|---|---|---|
| Inside* | about 0.78 | 600 |
| Plies 2-10 | 0.9 | 550 |
| Plies 11-18 | 0.72 | 620 |
| Plies 19-27 | 0.9 | 550 |
| Ply 28** | 0.68 | 740 |
| Outer Ply | NA | 220 |

| | | |
|---|---|---|
| *The inside ply is provided for manufacturing considerations **Ply 28 and the outer ply are provided for manufacturing and decorative considerations | | |

### Construction 2

**ID:** 78.7 mm **OD:** 110.7 mm **Wall Thickness** (estimated): 17 mm

| **Ply** | **Density (g/cc)** | **Thickness (micron)** |
|---|---|---|
| Inside* | about 0.72 | 620 |
| Plies 2-18 | 0.9 | 550 |
| Plies 19-29 | 0.72 | 620 |
| Ply 30** | 0.68 | 740 |
| Outer Ply | NA | 220 |

| | | |
|---|---|---|
| *The inside ply is provided for manufacturing considerations **Ply 30 and the outer ply are provided for manufacturing and decorative considerations | | |

### Construction 3

**ID:** 76.2mm (3 inch) **OD** (estimated): 94.5mm (3.72 inch)
**Wall Thickness** (estimated): 18.2mm (0.717 inch)

| **Ply** | **Density (g/cc)** | **Thickness (mm) [Thickness (inch)]** |
|---|---|---|
| Inside* | 0.76 | 0.635 [0.025] |
| Plies 2-21 | 0.82 | 0.559 [0.022] |
| Plies 22-32 | 0.68 | 0.635 [0.025] |
| Outer Ply** | NA | 0.330 [0.013] |

| | | |
|---|---|---|
| * The inside ply is provided for manufacturing considerations ** The outer ply is provided for manufacturing and decorative considerations | | |

### Construction 4

**ID:** 152.4mm (6 inch) **OD** (estimated): 168.4mm (6.63 inch)
**Wall Thickness** (estimated): 16.1mm (0.633 inch)

| **Ply** | **Density (g/cc)** | **Thickness (mm) Thickness (inch)]** |
|---|---|---|
| Inside* | 0.76 | 0.635 [0.025] |
| Plies 2-11 | 0.9 | 0.559 [0.022] |
| Plies 12-31 | 0.76 | 0.635 [0-025] |
| Plies 32-37 | 0.9 | 0.559 [0.022] |
| Ply 38** | 0.76 | 0.635 [0.025] |
| Outer Ply** | NA | 0.330 [0.013] |

| | | |
|---|---|---|
| * The inside ply is provided for manufacturing considerations ** Ply 38 and outer ply are provided for manufacturing and decorative considerations | | |

### Construction 5

**ID:** 152.4mm (6 inch) **OD** (estimated): 168.4mm (6-63 inch)
**Wall Thickness** (estimated): 16.1 mm (0.633 inch)

| **Ply** | **Density (g/cc)** | **Thickness (mm) [Thickness (inch)]** |
|---|---|---|
| Inside* | 0.76 | 0.635 [0.025] |
| Plies 2-11 | 0.82 | 0.559 [0.022] |
| Plies 12-31 | 0.68 | 0.635 [0.025] |
| Plies 32-37 | 0.82 | 0.559 [0.022] |
| Ply 38** | 0.76 | 0.635 [0.025] |
| Outer Ply** | 0.65 | 0.330 [0.013] |

| | | |
|---|---|---|
| * The inside ply is provided for manufacturing considerations **Ply 38 and the outer ply are provided for manufacturing and decorative considerations | | |

Many modifications and other embodiments of the invention will come to mind to one skilled in the art to which this invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A multi-ply paperboard core for supporting a roll of wide, continuous paper mill sheet comprising:
a multi-ply paperboard core structure having a length exceeding about 100 in. (255 cm.), and being defined by a generally cylindrical body wall having a thickness of at least about 15 mm;
said body wall including a radially interior multi-ply zone constituting at least about 25% of the total thickness of the body wall and consisting essentially of paperboard plies, each having a density exceeding about 0.80 g/cc; and,
a second multi-ply zone within the radially outer 70% of the total thickness of the body wall consisting essentially of paperboard plies each having a density of between about 0.65 and about 0.75 g/cc, said second zone having a thickness of at least about 4 mm.

2. The multi-ply paperboard core for supporting a roll of wide continuous paper mill sheet according to Claim 1 wherein said paperboard plies in said interior multi-ply zone each have a density between about 0.82 and 0.90 g/cc.

3. The multi-ply paperboard core for supporting a roll of wide continuous paper mill sheet according to any of the previous Claims wherein said paperboard plies in said second multi-ply zone each have a density of between about 0.67 and 0.73 g/cc.

4. The multi-ply paperboard core for supporting a roll of wide continuous paper mill sheet according to any of the previous Claims wherein said interior multi-ply zone constitutes between about 30 and 35% of the total thickness of the body wall.

5. The multi-ply paperboard core for supporting a roll of wide continuous paper mill sheet according to any of the previous Claims wherein said second multi-ply zone has a thickness of between about 40 and about 50% of the total thickness of the body wall.

6. The multi-ply paperboard core for supporting a roll of wide, continuous paper mill sheet according to any of the previous Claims wherein said core has an inside diameter of 150 to 152 mm and said radially interior multi-ply zone constitutes about 25% to about 35% of the total thickness of the body wall and further comprising a third multi-ply zone positioned radially outwardly of said second zone, said third zone consisting essentially of paperboard plies having a density exceeding about 0.80 g/cc and constituting between about 30% and about 35% of the total thickness of the body wall, and said plies within said zone constituting between about 35% and about 45% of the total thickness of the body wall.

7. The multi-ply paperboard core for supporting a roll of wide continuous paper mill sheet according to Claim 6 wherein said interior multi-ply zone constitutes about 33% of the total thickness of the body wall.

8. A multi-ply paperboard core for supporting a roll of wide, continuous paper mill sheet according to Claim 1, wherein:
the core has an inside diameter of about 3 in. (76.2 mm);
the radially interior multi-ply zone constitutes at least about 50% of the total thickness of the body wall; and
the second multi-ply zone is within the radially outer 50% of the body wall thickness and has a thickness of at least about 5 mm.

9. The multi-ply paperboard core for supporting a roll of wide continuous paper mill sheet according to Claim 8 wherein said paperboard plies in said radially interior multi-ply zone each have a density between about 0.82 and 0.90 g/cc.

10. The multi-ply paperboard core for supporting a roll of wide continuous paper mill sheet according to any of Claims 7-8 wherein said paperboard plies in said second multi-ply zone each have a density of between about 0.67 and 0.73 g/cc.

11. The multi-ply paperboard core for supporting a roll of wide continuous paper mill sheet according to any of Claims 8 or 9 wherein said interior multi-ply zone constitutes about 55 to about 65% of the total thickness of the body wall.

12. The multi-ply paperboard core for supporting a roll of wide continuous paper mill sheet according to Claim 11 wherein said second multi-ply zone has a thickness of between about 35 and about 45% of the total thickness of the body wall.

13. The multi-ply paperboard core for supporting a roll of wide continuous paper mill sheet according to any of Claim 8-11 wherein said body wall has a total thickness of about 16 mm or greater.

14. A multi-ply paperboard core for supporting a roll of wide, continuous paper mill sheet comprising:
a multi-ply paperboard core structure having a length exceeding about 100 in. (255 cm.), and being defined by a generally cylindrical body wall having a thickness of at least about 15 mm, and an inside diameter of 150-152 mm;
said body wall including a radially interior multi-ply zone constituting about 25% to about 35% of the total thickness of the body wall and consisting essentially of paperboard plies, having a density such at least that substantially all of the plies forming the radially interior 15% of the body wall have a density exceeding about 0.80 g/cc, and substantially all of the other plies in said radially interior multi-ply zone have a density of between about 0.67 and 0.73 g/cc
a second multi-ply zone within the radially outer 70% of the total thickness of the body wall consisting essentially of paperboard plies each having a density of between about 0.65 and about 0.75 g/cc, said second zone having a thickness of at least about 4 mm. total body wall thickness exceeds about 15 mm; and
said paperboard core comprises a total thickness exceeding 5 mm formed of paperboard plies having a density of between about 0.67 and 0.73 g/cc, and a total thickness exceeding 9 mm formed of paperboard plies having a density exceeding about 0.80 g/cc.

15. The multi-ply paperboard core for supporting a roll of wide, continuous paper mill sheet according to Claim 14 further comprising a third multi-ply zone positioned radially outwardly of said second zone, constituting about 25% to about 35% of the total thickness of the body wall and consisting essentially of paperboard plies, having a density such at least that substantially all of the plies forming the radially exterior 15% of the body wall have a density exceeding about 0.80 g/cc, and substantially all of the other plies in said radially outer multi-ply zone have a density of between about 0.67 and 0.73 g/cc.

## Patentansprüche

1. Mehrschichtenkartonkern zur Stützung einer Rolle breiten, kontinuierlichen Papierfabrikpapiers, der umfasst:
eine Mehrschichtenkartonkemstruktur, die eine Länge aufweist, die ca. 100 Zoll (255 cm) überschreitet und durch eine allgemein zylindrische Körperwand mit einer Stärke von mindestens ca. 15 mm definiert ist;
die Körperwand einschließlich einer radial inneren Mehrschichtenzone, die mindestens ca. 25% der Gesamtstärke der Körperwand konstituiert und im Wesentlichen aus Kartonschichten besteht, wobei jede eine Dichte aufweist, die ca, 0,80 g/cm³ überschreitet; und
eine zweite Mehrschichtenzone innerhalb der radial äußeren 70% der Gesamtstärke der Körperwand, die im Wesentlichen aus Kartonschichten besteht, wobei jede eine Dichte zwischen ca. 0,65 und ca. 0,75 g/cm³ aufweist und die zweite Zone eine Stärke von mindestens ca. 4 mm hat.

2. Mehrschichtenkartonkern zur Stützung einer Rolle breiten, kontinuierlichen Papierfabrikpapiers nach Anspruch 1, wobei die Kartonschichten in der inneren Mehrschichtenzone jeweils eine Dichte zwischen ca. 0,82 und 0,90 g/cm³ aufweisen.

3. Mehrschichtenkartonkern zur Stützung einer Rolle breiten, kontinuierlichen Papierfabrikpapiers nach einem beliebigen der vorhergehenden Ansprüche, wobei die Kartonschichten in der zweiten Mehrschichtenzone jeweils eine Dichte zwischen ca, 0,67 und 0,73 g/cm³ aufweisen.

4. Mehrschichtenkartonkern zur Stützung einer Rolle breiten, kontinuierlichen Papierfabrikpapiers nach einem beliebigen der vorhergehenden Ansprüche, wobei die innere Mehrschichtenzone zwischen ca. 30 und 35% der Gesamtstärke der Körperwand konstituiert.

5. Mehrschichtenkartonkern zur Stützung einer Rolle breiten, kontinuierlichen Papierfabrikpapiers nach einem beliebigen der vorhergehenden Ansprüche, wobei die zweite Mehrschichtenzone eine Stärke zwischen ca. 40 und 50% der Gesamtstärke der Körperwand aufweist.

6. Mehrschichtenkartonkern zur Stützung einer Rolle breiten, kontinuierlichen Papierfabrikpapiers nach einem beliebigen der vorhergehenden Ansprüche, wobei der Kern einen Innendurchmesser von 150 bis 152 mm aufweist und die radial innere Mehrschichtenzone ca. 25% bis ca. 35% der Gesamtstärke der Körperwand konstituiert und weiter eine dritte Mehrschichtenzone umfasst, die radial nach außen von der zweiten Zone positioniert ist, wobei die dritte Zone im Wesentlichen aus Kartonschichten mit einer Dichte besteht, die ca. 0,80 g/cm³ überschreitet und zwischen ca. 30% und ca. 35% der Gesamtstärke der Körperwand konstituiert und die Schichten innerhalb der Zone zwischen ca. 35% und ca. 45% der Gesamtstärke der Körperwand konstituieren.

7. Mehrschichtenkartonkern zur Stützung einer Rolle breiten, kontinuierlichen Papierfabrikpapiers nach Anspruch 6, wobei die innere Mehrschichtenzone ca. 33% der Gesamtstärke der Körperwand konstituiert.

8. Mehrschichtenkartonkern zur Stützung einer Rolle breiten, kontinuierlichen Papierfabrikpapiers nach Anspruch 1, wobei:
der Kern einen Innendurchmesser von ca. 3 Zoll (76,2 mm) aufweist;
die radial innere Mehrschichtenzone mindestens ca. 50% der Gesamtstärke der Körperwand konstituiert; und
sich die zweite Mehrschichtenzone innerhalb der radial äußeren 50% der Körperwandstärke befindet und eine Stärke von mindestens 5 mm aufweist.

9. Mehrschichtenkartonkern zur Stützung einer Rolle breiten, kontinuierlichen Papierfabrikpapiers nach Anspruch 8, wobei die Kartonschichten in der radial inneren Mehrschichtenzone jeweils eine Dichte zwischen ca. 0,82 und 0,90 g/cm³ aufweisen.

10. Mehrschichtenkartonkern zur Stützung einer Rolle breiten, kontinuierlichen Papierfabrikpapiers nach einem beliebigen der Ansprüche 7-8, wobei die Kartonschichten in der zweiten Mehrschichtenzone jeweils eine Dichte zwischen ca. 0,67 und 0,73 g/cm³ aufweisen.

11. Mehrschichtenkartonkern zur Stützung einer Rolle breiten, kontinuierlichen Papierfabrikpapiers nach einem beliebigen der Ansprüche 8 oder 9, wobei die innere Mehrschichtenzone ca. 55 bis ca. 65% der Gesamtstärke der Körperwand konstituiert.

12. Mehrschichtenkartonkern zur Stützung einer Rolle breiten, kontinuierlichen Papierfabrikpapiers nach Anspruch 11, wobei die zweite Mehrschichtenzone eine Stärke zwischen ca. 35 und 45% der Gesamtstärke der Körperwand aufweist.

13. Mehrschichtenkartonkern zur Stützung einer Rolle breiten, kontinuierlichen Papierfabrikpapiers nach einem beliebigen der Ansprüche 8-11, wobei die Körperwand eine Gesamtstärke von ca. 16 mm oder größer aufweist.

14. Mehrschichtenkartonkern zur Stützung einer Rolle breiten, kontinuierlichen Papierfabrikpapiers, der umfasst:
eine Mehrschichtenkartonkemstruktur, die eine Länge aufweist, die ca. 100 Zoll (255 cm) überschreitet und durch eine allgemein zylindrische Körperwand mit einer Stärke von mindestens ca. 15 mm und einen Innendurchmesser von 150-152 mm definiert ist;
die Körperwand eine radial innere Mehrschichtenzone aufweist, die ca. 25% bis ca. 35% der Gesamtstärke der Körperwand konstituiert und im Wesentlichen aus Kartonschichten besteht, die mindestens solch eine Dichte aufweisen, dass im Wesentlichen alle der Schichten, welche die radial inneren 15% der Körperwand bilden, eine Dichte aufweisen, die ca. 0,80 g/cm³ überschreitet und im Wesentlichen alle der anderen Schichten in der radial inneren Mehrschichtenzone eine Dichte von zwischen ca.0,67 und 0,73 g/cm³ aufweisen.
eine zweite Mehrschichtenzone innerhalb der radial äußeren 70% der Gesamtstärke der Körperwand im Wesentlichen aus Kartonschichten besteht, wobei jede eine Dichte von zwischen ca. 0,65 und ca. 0,75 g/cm³ aufweist, wobei die zweite Zone eine Stärke von mindestens ca. 4 mm hat und die Gesamtwandstärke ca. 15 mm überschreitet; und
den Kartonkern, der eine 5 mm überschreitende Gesamtstärke umfasst, die aus Kartonschichten gebildet ist, die eine Dichte von zwischen ca. 0,67 und 0,73 g/cm³ aufweisen und der eine 9 mm überschreitende Gesamtstärke umfasst, die aus Kartonschichten gebildet ist, die eine Dichte aufweisen, die ca. 0,80 g/cm³ überschreitet.

15. Mehrschichtenkartonkern zur Stützung einer Rolle breiten, kontinuierlichen Papierfabrikpapiers nach Anspruch 14, der weiter eine dritte Mehrschichtenzone umfasst, die radial nach außen von der zweiten Zone positioniert ist und ca. 25% bis ca. 35% der Gesamtstärke der Körperwand konstituiert und im Wesentlichen aus Kartonschichten besteht, die mindestens solch eine Dichte aufweisen, dass im Wesentlichen alle Schichten, welche die radial äußeren 15% der Körperwand bilden, eine Dichte aufweisen, die ca. 0,80 g/cm³ überschreitet und im Wesentlichen alle anderen Schichten in der radial äußeren Mehrschichtenzone eine Dichte von zwischen ca. 0,67 und 0,73 g/cm³ auf weisen.

## Revendications

1. Noyau de carton à plusieurs plis pour supporter un rouleau de feuille papetière large et continue comprenant:
une structure de noyau de carton à plusieurs plis possédant une longueur dépassant environ 100 pouces (255 cm), et étant définie par une paroi de corps généralement cylindrique possédant une épaisseur d'au moins environ 15 mm;
ladite paroi de corps incluant une zone radialement intérieure à plusieurs plis constituant au moins environ 25% de l'épaisseur totale de la paroi de corps et consistant essentiellement de plis de carton, chacun possédant une densité dépassant environ 0,80 g/cc; et,
une seconde zone à plusieurs plis à l'intérieur des 70% radialement extérieur de l'épaisseur totale de la paroi de corps consistant essentiellement de plis de carton possédant chacun une densité comprise entre environ 0,65 et environ 0,75 g/cc, ladite seconde zone possédant une épaisseur d'au moins environ 4 mm.

2. Noyau de carton à plusieurs plis pour supporter un rouleau de feuille papetière large et continue selon la revendication 1 dans lequel lesdits plis de carton dans ladite zone intérieure à plusieurs plis possèdent chacun une densité comprise entre environ 0,82 et 0,90 g/cc.

3. Noyau de carton à plusieurs plis pour supporter un rouleau de feuille papetière large et continue selon une quelconque des revendications précédentes dans lequel lesdits plis de carton dans ladite seconde zone à plusieurs plis possèdent chacun une densité comprise entre environ 0,67 et 0,73g/cc.

4. Noyau de carton à plusieurs plis pour supporter un rouleau de feuille papetière large et continue selon une quelconque des revendications précédentes dans lequel ladite zone intérieure à plusieurs plis constitue entre environ 30 et 35% de l'épaisseur totale de la paroi de corps.

5. Noyau de carton à plusieurs plis pour supporter un rouleau de feuille papetière large et continue selon une quelconque des revendications précédentes dans lequel ladite seconde zone à plusieurs plis possède une épaisseur comprise entre environ 40 et environ 50% de l'épaisseur totale de la paroi de corps.

6. Noyau de carton à plusieurs plis pour supporter un rouleau de feuille papetière large et continue selon une quelconque des revendications précédentes dans lequel ledit noyau possède un diamètre intérieur de 150 à 152 mm et ladite zone radialement intérieure à plusieurs plis constitue environ 25% à environ 35% de l'épaisseur totale de la paroi de corps et comprenant en outre une troisième zone à plusieurs plis positionnée radialement vers l'extérieur de ladite seconde zone, ladite troisième zone consistant essentiellement de plis de carton possédant une densité dépassant environ 0,80 g/cc et constituant entre environ 30% et environ 35% de l'épaisseur totale de la paroi de corps, et lesdits plis à l'intérieur de ladite zone constituant entre environ 35% et environ 45% de l'épaisseur totale de la paroi de corps.

7. Noyau de carton à plusieurs plis pour supporter un rouleau de feuille papetière large et continue selon la revendication 6 dans lequel ladite zone intérieure à plusieurs plis constitue environ 33% de l'épaisseur totale de la paroi de corps.

8. Noyau de carton à plusieurs plis pour supporter un rouleau de feuille papetière large et continue selon la revendication 1, dans lequel:
le noyau possède un diamètre intérieur d'environ 3 pouces (76,2 mm);
la zone radialement intérieure à plusieurs plis constitue au moins environ 50% de l'épaisseur totale de la paroi de corps; et
la seconde zone à plusieurs plis est comprise à l'intérieur des 50% radialement extérieur de l'épaisseur de paroi de corps et possède une épaisseur d'au moins environ 5 mm.

9. Noyau de carton à plusieurs plis pour supporter un rouleau de feuille papetière large et continue selon la revendication 8 dans lequel lesdits plis de carton dans ladite zone radialement intérieure à plusieurs plis possèdent chacun une densité comprise entre environ 0,82 et 0,90 g/cc.

10. Noyau de carton à plusieurs plis pour supporter un rouleau de feuille papetière large et continue selon une quelconque des revendications 7-8 dans lequel lesdits plis de carton dans ladite seconde zone à plusieurs plis possèdent chacun une densité comprise entre environ 0,67 et 0,73 g/cc.

11. Noyau de carton à plusieurs plis pour supporter un rouleau de feuille papetière large et continue selon une quelconque des revendications 8 ou 9 dans lequel ladite zone intérieure à plusieurs plis constitue environ 55 à 65% de l'épaisseur totale de la paroi de corps.

12. Noyau de carton à plusieurs plis pour supporter un rouleau de feuille papetière large et continue selon la revendication 11 dans lequel ladite seconde zone à plusieurs plis possède une épaisseur comprise entre environ 35 et environ 45% de l'épaisseur totale de la paroi de corps.

13. Noyau de carton à plusieurs plis pour supporter un rouleau de feuille papetière large et continue selon une quelconque des revendications 8-11 dans lequel ladite paroi de corps possède une épaisseur totale supérieure ou égale à environ 16 mm.

14. Noyau de carton à plusieurs plis pour supporter un rouleau de feuille papetière large et continue comprenant:
une structure de noyau de carton à plusieurs plis possédant une longueur dépassant environ 100 pouces (255 cm), et étant définie par une paroi de corps généralement cylindrique possédant une épaisseur d'au moins environ 15 mm, et un diamètre intérieur de 150-152mm;
ladite paroi de corps incluant une zone radialement intérieure à plusieurs plis constituant environ 25% à environ 35% de l'épaisseur totale de la paroi de corps et consistant essentiellement de plis de carton, possédant une densité au moins telle que pratiquement tous les plis formant les 15% radialement intérieur de la paroi de corps possèdent une densité dépassant environ 0,80 g/cc, et pratiquement tous les autres plis dans ladite zone radialement intérieure à plusieurs plis possèdent une densité comprise entre environ 0,67 et 0,73 g/cc.
une seconde zone à plusieurs plis à l'intérieur des 70% radialement extérieur de l'épaisseur totale de la paroi de corps consistant essentiellement de plis de carton possédant chacun une densité comprise entre environ 0,65 et environ 0,75 g/cc, ladite seconde zone possédant une épaisseur d'au moins environ au moins 4 mm, l'épaisseur de paroi de corps totale dépassant environ 15 mm; et
ledit noyau de carton comprenant une épaisseur totale dépassant 5 mm formée de plis de carton possédant une densité comprise entre environ 0,67 et 0,73 g/cc, et une épaisseur totale dépassant 9 mm formée de plis de carton possédant une densité dépassant environ 0,80 g/cc.

15. Noyau de carton à plusieurs plis pour supporter un rouleau de feuille papetière large et continue selon la revendication 14 comprenant en outre une troisième zone à plusieurs plis positionnée radialement vers l'extérieur de ladite seconde zone, constituant environ 25% à environ 35% de l'épaisseur totale de la paroi de corps et consistant essentiellement de plis de carton, possédant une densité au moins telle que pratiquement tous les plis formant les 15% radialement extérieur de la paroi de corps possèdent une densité dépassant environ 0,80 g/cc, et pratiquement tous les autres plis dans ladite zone radialement extérieure à plusieurs plis possèdent une densité comprise entre environ 0,67 et 0,73 g/cc.
